# EUROPÄISCHE PATENTSCHRIFT

(11) **EP 0 751 964 B1**
(45) Veröffentlichungstag und Bekanntmachung des Hinweises auf die Patenterteilung: **26.05.1999**
(21) Anmeldenummer: 95913087.3
(22) Anmeldetag: 11.03.1995
(51) Int. Cl.: C08F 8/30, C10L 1/22

(54) **ALS PARAFFINDISPERGATOREN GEEIGNETE MODIFIZIERTE COPOLYMERISATE, IHRE HERSTELLUNG UND VERWENDUNG SOWIE DIESE ENTHALTENDE ERDÖLMITTELDESTILLATE**
MODIFIED COPOLYMERS SUITABLE AS PARAFIN DISPERSANTS, THEIR PRODUCTION AND USE AND MIDDLE PETROLEUM DISTILLATES CONTAINING THEM
COPOLYMERES MODIFIES S'UTILISANT COMME DISPERSANTS DE PARAFFINE, LEUR PREPARATION, LEUR UTILISATION ET DISTILLATS MOYENS DE PETROLE LES CONTENANT

(30) Priorität: 24.03.1994 DE 4410196
(43) Veröffentlichungstag der Anmeldung: 08.01.1997
(73) Patentinhaber: BASF AKTIENGESELLSCHAFT, 67056 Ludwigshafen (DE)
(72) Erfinder: DRALLE-VOSS, Gabriele, D-64297 Darmstadt (DE); OPPENLÄNDER, Knut, D-67061 Ludwigshafen (DE); FAUL, Dieter, D-67150 Niederkirchen (DE); ROSER, Joachim, D-68165 Mannheim (DE); HARTMANN, Heinrich, D-67117 Limburgerhof (DE); WENDEROTH, Bernd, D-69488 Birkenau (DE)
(86) Internationale Anmeldenummer: EP9500907
(87) Internationale Veröffentlichungsnummer: WO9525756

(56) Entgegenhaltungen:
- WO-A-90/12821
- FR-A- 2 528 051
- US-A- 4 079 042

## Beschreibung

Die Erfindung betrifft als Paraffindispergatoren geeignete modifizierte Copolymerisate, ihre Herstellung und Verwendung, sowie Erdölmitteldestillate, welche diese modifizierten Copolymerisate enthalten. Die Erfindung betrifft insbesondere durch Umsetzung bestimmter Copolymerisate mit Aminen erhältliche modifizierte Copolymerisate auf der Basis eines Copolymerisats aus einer ethylenisch ungesättigten Dicarbonsäure und/oder einem Dicarbonsäurederivat und einem Diketen.

Mitteldestillate wie Gasöle, Dieselöle oder Heizöle, die durch Destillation aus Erdölen gewonnen werden, haben je nach Herkunft des Rohöls unterschiedliche Gehalte an Paraffinen. Bei tieferen Temperaturen kommt es zur Ausscheidung fester Paraffine (Trübungspunkt oder Cloud Point, CP). Bei weiterer Abkühlung bilden die plättchenförmigen n-Paraffinkristalle eine "Kartenhausstruktur" und das Mitteldestillat stockt, obwohl der überwiegende Teil des Mitteldestillats noch flüssig ist. Durch die ausgefallenen n-Paraffine im Temperaturbereich zwischen Trübungspunkt und Stockpunkt (Pour Point) wird die Fließfähigkeit der Erdöldestillat-Kraftstoffe erheblich beeinträchtigt. Die Paraffine verstopfen Filter und verursachen eine ungleichmäßige oder völlig unterbrochene Kraftstoffzufuhr zu den Verbrennungsaggregaten. Ähnliche Störungen treten bei Heizölen auf.

Es ist seit langem bekannt, daß durch geeignete Zusätze das Kristallwachstum der Paraffine in den Erdölmitteldestillat-Brenn- und Kraftstoffen modifiziert werden kann. Gut wirksame Additive verhindern, daß Mitteldestillate derartige Kartenhaus-Strukturen ausbilden und bei Temperaturen wenige Grad Celsius unterhalb der Temperatur, bei welcher die ersten Paraffinkristalle auskristallisieren, bereits fest werden. Es werden stattdessen feine, gut kristallisierte, separate Paraffinkristalle gebildet, welche Filter in Kraftfahrzeugen und Heizungsanlagen passieren oder zumindest einen für den flüssigen Teil der Mitteldestillate durchlässigen Filterkuchen bilden, so daß ein störungsfreier Betrieb sichergestellt ist.

Als Fließverbesserer werden seit langem Ethylen-Vinylcarboxylat-Copolymere eingesetzt, wie sie z.B. aus der US-A-3 048 479 und US-A-3 627 838 bekannt ist.

Ein Nachteil dieser Additive beruht darin, daß die ausgefallenen Paraffinkristalle aufgrund ihrer gegenüber dem flüssigen Teil höheren Dichte dazu neigen, sich beim Lagern mehr und mehr am Boden des Behälters abzusetzen. Dadurch bildet sich im oberen Behälterteil eine homogene paraffinarme Phase und am Boden eine zweiphasige paraffinreiche Schicht. Da sowohl in Fahrzeugtanks als auch in Lager- oder Liefertanks der Mineralölhändler der Abzug des Mitteldestillates meist wenig oberhalb des Behälterbodens erfolgt, besteht die Gefahr, daß die hohe Konzentration an festen Paraffinen zu Verstopfungen von Filtern und Dosiereinrichtungen führt. Diese Gefahr wird um so größer, je weiter die Lagertemperatur die Ausscheidungstemperatur der Paraffine unterschreitet, da die ausgeschiedene Paraffinmenge mit sinkender Temperatur ansteigt.

Bei den Paraffinkristallmodifikatoren, den sog. Fließverbesserern oder Paraffindispergatoren, handelt es sich im allgemeinen um Polymere, die durch Co-Kristallisation (Interaktion) das Kristallwachstum der n-Paraffine verändern und die Fließeigenschaften des Mitteldestillats bei niedrigen Temperaturen verbessern. Die Wirksamkeit der Fließverbesserer wird nach DIN EN 116 indirekt durch Messung des "Cold Filter Plugging Point" (CFPP) ausgedrückt.

Aus der DE-A-2 342 300 sind Copolymerisate aus Maleinsäureanhydrid (MSA) und Diketen bekannt. Diese Copolymerisate bzw. deren vollständig oder teilweise hydrolysierte Form werden als geeignete Produkte zur Herstellung von oberflächenaktiven Verbindungen, Haarsprayzusammensetzungen, Glasreinigern, Textilhilfsmitteln oder Bindemitteln zur Verfestigung von Vliesstoffen und Papier beschrieben.

In der DE-A-2 531 195 werden Umsetzungsprodukte von MSA/Diketen-Copolymeren bzw. MSA/Diketen/Vinylether-Terpolymeren mit Alkoholen mit 1 bis 18 Kohlenstoffatomen, Polyethylenglykolmonoalkylethern sowie mit Gemischen aus beiden beschrieben. Diese werden insbesondere in Textilhilfsmitteln und Haarkosmetik eingesetzt.

Es bestand die Aufgabe, Copolymerisate zur Verfügung zu stellen, die die Fließfähigkeit von Erdölmitteldestillaten bei tiefer Temperatur gewährleisten und die eine solche Dispergierwirkung haben, daß ein Absetzen ausgeschiedener Paraffine verzögert oder verhindert wird. Die Fließverbesserer sollen ihre Wirkung unabhängig von der Zusammensetzung der Erdölmitteldestillate entfalten.

Demgemäß wurden modifizierte Copolymerisate gefunden, welche erhältlich sind durch Umsetzung eines Copolymerisats aus einer ethylenisch ungesättigten Dicarbonsäure und/oder einem Dicarbonsäurederivat, und einem Diketen der allgemeinen Formel I 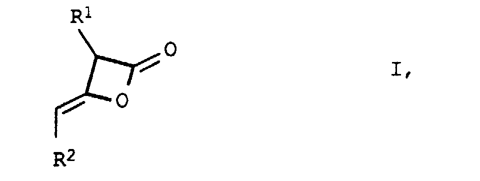 worin R¹ und R² unabhängig voneinander Wasserstoff oder C₁-C₃₀-Alkyl bedeuten, wobei die Mitverwendung von monoethylenisch ungesättigten C₃- bis C₈-Monocarbonsäuren als Comonomere ausgeschlossen wird, mit einem Amin der allgemeinen Formel II 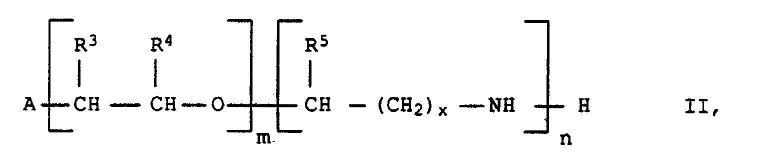 worin
m = 0 bis 100, n = 0 bis 5 und x = 0 bis 5 sein können,
R³, R⁴ und R⁵ unabhängig voneinander Wasserstoff oder einen C₁-C₅-Alkylrest bedeuten,
A für NR⁶R⁷ oder einen C₂-C₃₀-Alkoxyrest steht,
worin mindestens einer der Substituenten R⁶ oder R⁷ von Wasserstoff verschieden ist und einen C₁-C₃₀-Alkyl- oder Alkenylrest, oder einen Polyetherrest 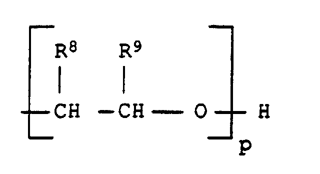
mit R⁸, R⁹ = Wasserstoff oder C₁-C₅-Alkyl und p = 1 bis 100 bedeutet,
mit der Maßgabe, daß für n = 0 A die Bedeutung NR⁶R⁷ hat.

Gegenstand der Erfindung ist außerdem die Verwendung dieser Copolymerisate als Zusatz für Erdölmitteldestillate, sowie diese Copolymerisate enthaltende Erdölmitteldestillate.

Gegenstand der Erfindung ist darüber hinaus ein Verfahren zur Herstellung von modifizierten Copolymerisaten, die als Paraffindispergatoren geeignet sind, durch Umsetzung eines Copolymerisats aus einer ethylenisch ungesättigten Dicarbonsäure und/oder einem Dicarbonsäurederivat und einem Diketen der allgemeinen Formel I 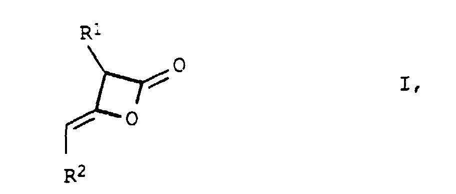 worin R¹ und R² unabhängig voneinander Wasserstoff oder C₁-C₃₀-Alkyl bedeuten, wobei die Mitverwendung von monoethylenisch ungesättigten C₃- bis C₈-Monocarbonsäuren als Comonomere ausgeschlossen wird,
mit einem Amin der allgemeinen Formel II 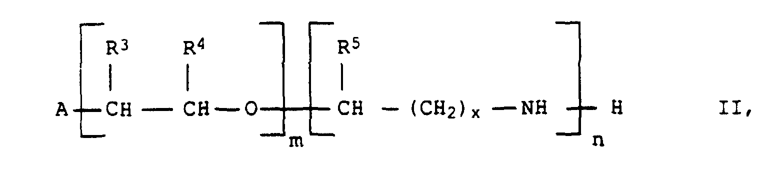 worin
m - 0 bis 100, n - 0 bis 5 und x - 0 bis 5 sein können,
R³, R⁴ und R⁵ unabhängig voneinander Wasserstoff oder einen C₁-C₅-Alkylrest bedeuten,
A für NR⁶R⁷ oder einen C₂-C₃₀-Alkoxyrest steht,
worin mindestens einer der Substituenten R⁶ oder R⁷ von Wasserstoff verschieden ist und einen C₁-C₃₀-Alkyl- oder Alkenylrest, oder einen Polyetherrest 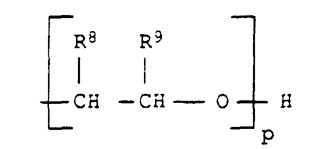 mit R⁸, R⁹ = Wasserstoff oder C₁-C₅-Alkyl und p = 1 bis 100 bedeutet, mit der Maßgabe, daß für n = 0 A die Bedeutung NR⁶R⁷ hat.

Die erfindungsgemäßen modifizierten Copolymerisate bestehen aus mindestens zwei verschiedenen Monomeren, nämlich einem Diketen der allgemeinen Formel I und einer ethylenisch ungesättigten Dicarbonsäure und/oder einem Dicarbonsäurederivat. Diese liegen in den Copolymerisatsträngen in der Regel in alternierender Abfolge vor.

Die Diketene der Formel I sind an sich bekannt. Das unsubstituierte Diketen ist ein wichtiges Ausgangsprodukt für die Herstellung von Acetessigsäure-Derivaten.

Ein Beispiel für ein substituiertes Diketen ist das unter der Bezeichnung Basoplast® von der BASF Aktiengesellschaft vertriebene Distearyldiketen, bei dem R¹ und R² jeweils 14 bis 16 Kohlenstoffatome aufweisen.

Erfindungsgemäß wird bevorzugt das unsubstituierte Diketen (R¹ und R² gleich Wasserstoff) eingesetzt.

Als ethylenisch ungesättigte Dicarbonsäuren oder Dicarbonsäurederivate geeignet sind erfindungsgemäß beispielsweise Fumarsäure, Maleinsäure, Itaconsäure, Mesaconsäure, Citraconsäure, Methylenmalonsäure, deren Ester sowie gegebenenfalls Säureanhydride.

Erfindungsgemäß bevorzugt werden α,β-ungesättigte Dicarbonsäuren oder Dicarbonsäurederivate der allgemeinen Formel III 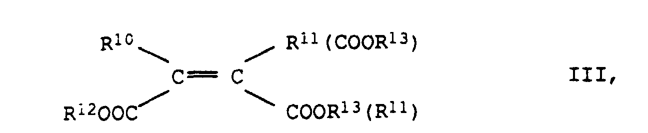 worin R¹⁰ bis R¹³ unabhängig voneinander Wasserstoff oder einen gegebenenfalls Heteroatome enthaltenden C₁-C₂₀-Alkylrest, R¹⁰ und R¹¹ insbesondere jeweils Wasserstoff, bedeuten, oder die Säureanhydride der entsprechenden cis-Dicarbonsäuren eingesetzt. Ganz besonders bevorzugt sind hierbei Maleinsäure, Maleinsäureanhydrid und Fumarsäureester.

Die erfindungsgemäß eingesetzten Copolymerisate können darüber hinaus noch weitere Monomere enthalten. Geeignete Comonomere sind beispielsweise α-Olefine, endständig ungesättigte polymere Ethylen-, Propen-, Buten- und Isobutenderivate, arylsubstituierte Olefine (z.B. Styrol), Vinylether und Vinylester.

Bevorzugte modifizierte Copolymerisate leiten sich von Copolymerisaten ab, die aus Maleinsäureanhydrid und dem unsubstituierten Diketen bestehen.

Die Polymerisation von ethylenisch ungesättigten Dicarbonsäuren bzw. Dicarbonsäurederivaten und Diketenen der Formel I erfolgt im allgemeinen in an sich bekannter Weise in inerten organischen Lösungsmitteln unter radikalischen Bedingungen (vgl. DE-A-2 342 300 bzw. DE-A-2 531 195). Geeignet sind insbesondere Lösungsmittel, welche praktisch nicht in die Polymerisation eingreifen und nicht mit den Monomeren reagieren. Solche Lösungsmittel, die alleine oder in Mischung verwendet werden können, sind beispielsweise Aceton, Methylethylketon, Diethylketon, Cyclohexanon, Tetrahydrofuran, Dioxan, Ethylacetat, Propionsäureethylester, aromatische Kohlenwasserstoffe, wie Benzol, Toluol, Xylol, Cumol, Tetralin, Solvent Naphtha (z.B. Solvesso® 150), aliphatische Kohlenwasserstoffe, wie Pentan, Hexan, Heptan, Octan, Isooctan, Cyclohexan, Decalin, Shellsol® D70, halogenierte aliphatische Kohlenwasserstoffe, wie Dichlormethan, Dichlorethan, Trichlorethan.

Solvesso® 150 der Fa. EXXON Chemical GmbH ist eine aromatische Lösungsmittelfraktion vom Siedeintervall 187-203°C, welche ca. 99 % Aromaten enthält.

Shellsol® D70 der Fa. Shell Chemical ist eine aliphatische Lösungsmittelfraktion vom Siedeintervall 195-245°C.

Vorzugsweise verwendet man als Lösungsmittel Aceton, Methylethylketon, Toluol, Xylol, Tetralin, Dekalin, Solvent Naphtha, oder Shellsol® D70.

Die Polymerisation von ethylenisch ungesättigten Dicarbonsäuren bzw. Dicarbonsäurederivaten, Diketenen und gegebenenfalls weiteren ethylenisch ungesättigten Monomeren erfolgt in der Regel in Gegenwart von Verbindungen, die unter den Polymerisationsbedingungen in Radikale zerfallen. Geeignete Polymerisationsinitiatoren sind beispielsweise Wasserstoffperoxid, organische Peroxide und Hydroperoxide, Azoverbindungen und Peroxodisulfate. Die Polymerisation kann auch durch Einwirkung energiereicher Strahlung oder durch Bestrahlung des Reaktionsgemisches in Gegenwart eines Photoinitiators, wie beispielsweise Benzoin, vorgenommen werden.

Die Initiatoren sollen vorzugsweise bei den gewählten Polymerisationstemperaturen eine Halbwertszeit von < 3 Std. besitzen. Vorzugsweise werden als Polymerisationsinitiatoren tert.-Butylperpivalat, Dilaurylperoxid, tert.-Butyl-per-2-ethylhexanoat (tert.-Butylperoctoat), tert.-Butylperbenzoat, Dicumylperoxid, Di-tert.-butylperoxid und 2,2'-Azobis(2-methylpropionitril), allein oder in Mischung, eingesetzt.

Die in Radikale zerfallenden Polymerisationsinitiatoren werden hierbei in üblichen Mengen eingesetzt, z.B. 0,1 bis 5 Gew.-%, bezogen auf die bei der Polymerisation verwendeten Mengen an Monomeren. Die Polymerisation wird vorzugsweise in Rührkesseln durchgeführt, die beispielsweise mit einem Anker-, Blatt- oder Impellerrührer ausgestattet sind. Die Polymerisation kann beispielsweise als Lösungs-, Fällungs- oder Suspensionspolymerisation durchgeführt werden. Bei der Fällungs- und Suspensionspolymerisation kann es vorteilhaft sein, zusätzlich in Gegenwart von Schutzkolloiden zu polymerisieren. Geeignete Schutzkolloide sind beispielsweise Copolymerisate aus Maleinsäureanhydrid und Vinylalkylethern, die 1 bis 20 Kohlenstoffatome in der Alkylgruppe enthalten, oder Copolymerisate aus Maleinsäureanhydrid und Olefinen mit 8 bis 20 Kohlenstoffatomen sowie deren Monoester mit C₁₀-C₂₀-Alkoholen oder Monoamide mit C₁₀-C₂₀-Aminen. Außerdem eignen sich Polyalkylvinylether, deren Alkylgruppe 1 bis 20 Kohlenstoffatome enthält, z.E. Polymethyl-, Polyethyl- und Polyisobutylvinylether. Falls bei der Copolymerisation ein Schutzkolloid eingesetzt wird, so betragen die wirksamen Mengen im allgemeinen 0,05 bis 4,0 Gew.-%, bezogen auf die zu polymerisierenden Monomeren.

Die Konzentration der Monomeren in den Lösungen beträgt im allgemeinen 5 bis 80, vorzugsweise 15 bis 60 Gew.-%. Die Polymerisationstemperatur liegt in der Regel im Bereich von 40 bis 160°C, vorzugsweise 50 bis 150°C.

Nach Beendigung der Polymerisation können die Polymerisate isoliert werden, z.B. durch Abdestillieren des bei der Polymerisation verwendeten Lösungsmittels bzw. durch Ausfällen der Polymeren mit einem geeigneten Lösungsmittel. Die Copolymerisate verbleiben dann als pulverförmiger Rückstand.

Die erfindungsgemäße Umsetzung dieser Copolymerisate mit den Aminen der Formel II kann allerdings auch ohne vorherige Isolation der Copolymerisate im gleichen Lösungsmittel vorgenommen werden.

Das mittlere Molekulargewicht (Gewichtsmittel) der Copolymere beträgt im allgemeinen 200 bis 50.000, vorzugsweise 400 bis 10.000. Im Hinblick auf ihre Verwendung zur Herstellung von Fließverbesserern (Paraffindispergatoren) sind solche mit einem mittleren Molekulargewicht von 500 bis 5000 bevorzugt. Die Bestimmung des Molekulargewichts erfolgt hierbei mittels Gel-Permeations-Chromatographie.

Die erfindungsgemäßen modifizierten Copolymerisate sind erhältlich durch Umsetzung dieser Copolymerisate mit einem Amin der allgemeinen Formel II 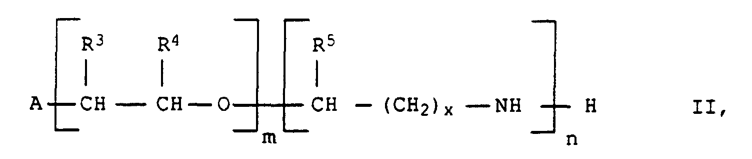 worin
m = 0 bis 100, n = 0 bis 5 und x = 0 bis 5 sein können,
R³, R⁴ und R⁵ unabhängig voneinander Wasserstoff oder einen C₁-C₅-Alkylrest bedeuten,
A für NR⁶R⁷ oder einen C₂-C₃₀-Alkoxyrest steht,
worin mindestens einer der Substituenten R⁶ oder R⁷ von Wasserstoff verschieden ist und einen C₁-C₃₀-Alkyl- oder Alkenylrest oder einen Polyetherrest 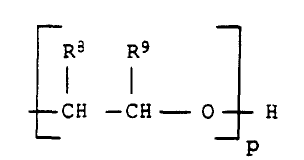
mit R⁸, R⁹ = Wasserstoff oder C₁-C₅-Alkyl und p = 1 bis 100 bedeutet,
mit der Maßgabe, daß für n = 0 A die Bedeutung NR⁶R⁷ hat.

Der R⁶ und/oder R⁷ bildende C₁-C₃₀-Alkyl- oder Alkenylrest ist vorzugsweise ein C₃-C₃₀- und besonders bevorzugt ein C₁₂-C₂₄-Alkyl- oder Alkenylrest, der mehrfach ungesättigt und gegebenenfalls verzweigt sein kann.

In einer bevorzugten Ausführungsform der Erfindung ist m oder n gleich 0.

Beispiele für Amine der Formel II, für die m = 0 ist, sind Distearylamin, Ditalgfettamin, Dioleylamin, Dikokosfettamin, oder auch Aminopropylstearylamin, Aminopropyllaurylamin, Aminopropyloleylamin und 2-Ethylhexylamin.

Beispiele für Amine der Formel II, für die n - 0 ist, sind die Alkoxylierungsprodukte von Distearylamin, Oleylamin, Ditalgfettamin, hydrierten Talgfettamin, Dikokosfettamin, Aminopropylstearylamin. Für n = 0 ist m vorzugsweise 1 bis 10. Besonders bevorzugt sind alkoxyliertes Stearylamin und alkoxyliertes Distearylamin, z.B. Hydroxyethyldistearylamin, Polyoxypropylen(5)-stearylamin.

Beispiele für weitere erfindungsgemäß einzusetzende Amine sind Aminopropylstearylalkohol, Aminopropylethoxystearylamin und Stearylpolyethylenglykolamin (aminiertes Lutensol® AT11 der BASF Aktiengesellschaft) .

Beim erfindungsgemäßen Verfahren werden das Copolymerisat aus einer ethylenisch ungesättigten Dicarbonsäure bzw. Dicarbonsäurederivat und einem Diketen der allgemeinen Formel I mit einem Amin der allgemeinen Formel II mit oder ohne Lösungsmittel in der Regel für 0,3 bis 30 Stunden auf Temperaturen von 80 bis 180°C erhitzt. Die gegebenenfalls eingesetzten Lösungsmittel verfügen zweckmäßig über keine aciden Wasserstoffatome, die mit den Copolymeren reagieren könnten. Es können die gleichen Lösungsmittel wie in der Polymerisation verwendet werden. Bevorzugt eingesetzt werden aromatische Kohlenwasserstoffe, wie z.B. Toluol, Xylol, Solvent Naphtha (z.B. Solvesso® 150) oder aliphatische Kohlenwasserstoffe wie z.B. Cyclohexan, Decalin, Shellsol® D70.

Bei Bedarf kann die Reaktion durch saure oder basische Katalysatoren beschleunigt werden, z.B. p-Toluolsulfonsäure, Natriummethylat, Schwefelsäure, phosphorige Säure, Citronensäure, Kalium-tert.-butylat oder Tetrabutylorthotitanat. Falls bei der Reaktion Kondensationswasser entsteht, wird es kontinuierlich abdestilliert. Die Reaktion muß nicht vollständig ablaufen. Die während der Umsetzung gebildeten Amid- oder Esterbindungen sowie die Abnahme der Konzentration des 4-Ringlactons können IR-spektroskopisch nachgewiesen werden. Gleichzeitig wird eine Abnahme der Säurezahl [mg KOH/g] beobachtet. Die Säurezahl ist vorzugsweise weniger als 160 mg KOH/g.

Das Amin der Formel II wird im allgemeinen in einer Menge von 0,2 bis 3 Mol pro Mol einpolymerisierter Dicarbonsäure(derivat)-Einheit eingesetzt. Bevorzugt ist eine Menge von 0,5 bis 1,5 Mol pro Mol Dicarbonsäure(derivat)einheiten.

Die erfindungsgemäßen modifizierten Copolymerisate finden Verwendung als Zusatz für Erdölmitteldestillate, worunter Petroleum, Heizöl und Dieselkraftstoffe mit einer Siedetemperatur von etwa 150 bis 400°C verstanden werden. Die Copolymerisate können den Mitteldestillaten direkt, bevorzugt aber als 20 bis 70 gew.-%ige Lösung zugesetzt werden. Geeignete Lösungsmittel sind aliphatische oder aromatische Lösungsmittel wie Xylol oder deren Gemische, weiterhin hochsiedende Aromatengemische, sowie Mitteldestillate. Die Menge an Copolymerisaten in den Erdölmitteldestillaten beträgt in der Regel 10 bis 10 000, vorzugsweise 20 bis 5000 und besonders bevorzugt 50 bis 1000 ppm. Je nach Verwendungszweck können die Mitteldestillate noch weitere Additive wie z.B. Fließverbesserer, Dispergatoren, Anti-Schaum-Mittel, Korrosionsschutzmittel, Antioxidantien, Demulgatoren, Schmierfähigkeitsverbesserer, Leitfähigkeitsverbesserer und/oder Farbstoffe enthalten.

Üblicherweise enthalten solche Mitteldestillate bereits an sich bekannte Fließverbesserer, die in der Patentliteratur eingehend beschrieben sind, z.B. in DE-A-19 14 756 und EP-A-486836 (Ethylen-Vinylester-Copolymerisate und deren Mischung mit anderen Copolymeren), EP-A-214876 (α-Olefin-Maleinsäureanhydridester) oder EP-A-155 807 (Alkylfumarat-Vinylacetat-Copolymere).

Es kommen jedoch auch gleichermaßen Terpolymere in Betracht, die neben Ethylen und Vinylestern oder Acrylestern noch weitere Comonomere enthalten. Das Molekulargewicht (Gewichtsmittel) dieser Fließverbesserer beträgt in der Regel 500 bis 5000, vorzugsweise 1000 bis 3000.

Die erfindungsgemäßen Copolymerisate bewirken in Mitteldestillaten unabhängig von deren Herkunft eine deutliche Verbesserung der Fließeigenschaften in der Kälte, indem sie die ausgeschiedenen Paraffinkristalle wirksam in der Schwebe halten, so daß es nicht zu Verstopfungen von Filtern und Leitungen durch abgesetztes Paraffin kommt. Sie weisen eine gute Breitenwirksamkeit auf und bewirken so, daß die ausgeschiedenen Paraffinkristalle in unterschiedlichen Mitteldestillaten sehr gut dispergiert werden.

### Beispiele

Die Prozentangaben in den Beispielen beziehen sich auf das Gewicht.

### 1.1 Herstellung der MSA/Diketen-Copolymerisate A1 und A2

### A1:

In einem Reaktor aus Glas, der mit Rührer und drei Zuläufen versehen war und während der Reaktion mit Stickstoff gespült wurde, wurde eine Lösung von 69 g Maleinsäureanhydrid in 340 g Toluol vorgelegt und unter Rühren auf 90°C aufgeheizt. Sobald die angegebene Temperatur erreicht war, wurden innerhalb von 3 h 67 g Diketen zudosiert. Gleichzeitig wurde eine Lösung von 2,7 g tert.-Butylperoctoat in 50 g Toluol innerhalb von 3,5 h zudosiert. 10 min nach Zulaufende wurden weitere 0,7 g tert.-Butylperoctoat innerhalb 10 Minuten zugegeben. Anschließend wurde die Temperatur von 90 auf 100°C angehoben und 2 h gerührt. Nach dem Abkühlen wurde die Suspension abgesaugt und getrocknet. Es wurden 108 g farbloses Pulver (80 % d. Th.) erhalten. Das Copolymerisat hatte einen K-Wert von 17 [5 %ig in H₂O]. Im IR-Spektrum zeigten sich charakteristische Banden bei 1840 cm⁻¹ (Lacton) und 1780 cm⁻¹ (Anhydrid).

### A2:

In einem Reaktor aus Glas der mit Rührer und drei Zuläufen versehen war und während der Reaktion mit Stickstoff gespült wurde, wurde eine Lösung von 13,8 g Maleinsäureanhydrid in 66 g Solvesso® 150 vorgelegt, dazu 13,4 g Diketen gegeben und anschließend unter Rühren auf 70°C aufgeheizt. Nach Erreichen dieser Temperatur wurden 15,4 g einer 1 %igen Lösung von tert.-Butylperpivalat in Solvesso® 150 innerhalb von 4 h zudosiert. Nach beendetem Zulauf wurde noch 1,5 h gerührt. Die so erhaltene Suspension hatte einen Feststoffgehalt von 12,4 % und wurde ohne weitere Aufarbeitung direkt weiter umgesetzt.

### 1.2 Herstellung der Fumarsäuredialkylester/Diketen-Copolymerisate A3 und A4

### A3:

In einem Reaktor aus Glas, der mit Rührer und drei Zuläufen versehen war, und während der Reaktion mit Stickstoff gespült wurde, wurde eine Lösung von 41,3 g Diethylfumarat in 27 g o-Xylol vorgelegt, auf 90°C erhitzt und bei dieser Temperatur mit einer Lösung von 20,2 g Diketen in 15,6 g o-Xylol tropfenweise versetzt. Parallel hierzu wurde innerhalb von 4 h eine Lösung von 3,1 g tert.-Butylperoctoat in 20 g o-Xylol zugegeben.
Nach beendeter Zugabe wurde noch 2 Stunden bei 95°C gerührt. Die so erhaltene gelbe Lösung hatte einen Feststoffgehalt von 50 % und wurde ohne weitere Aufarbeitung weiter umgesetzt.

### A4:

In einem Reaktor aus Glas, der mit Rührer und drei Zuläufen versehen war, und während der Reaktion mit Stickstoff gespült wurde, wurde eine Lösung von 49,4 g Fumarsäuredidecylester in 32 g o-Xylol vorgelegt, auf 90°C erhitzt und bei dieser Temperatur mit einer Lösung von 16,8 g Diketen in 17 g o-Xylol tropfenweise versetzt. Parallel hierzu wurde innerhalb von 3,5 h eine Lösung von 1,7 g tert.-Butylperoctoat in 16 g o-Xylol zugegeben.
Nach beendeter Zugabe wurde noch 2 Stunden bei 95°C gerührt. Die so erhaltene ölige Lösung hatte einen Feststoffgehalt von 50 % und wurde ohne weitere Aufarbeitung weiter umgesetzt.

### 1.3 Herstellung des MSA/Stearyldiketen-Copolymerisats A5

### A5:

In einem Reaktor aus Glas, der mit Rührer und drei Zuläufen versehen war, und während der Reaktion mit Stickstoff gespült wurde, wurde eine Lösung von 53,2 g Distearyldiketen (Basoplast® 20 der BASF Aktiengesellschaft) und 9,8 g MSA in 15,8 g Solvesso® 150 vorgelegt, auf 90°C erhitzt und bei dieser Temperatur innerhalb von 3,5 h mit einer Lösung von 3,15 g tert.-Butylperoctoat in 15 g Solvesso versetzt.
Nach beendeter Zugabe wurde noch 2 Stunden bei 95°C gerührt. Die so erhaltene viskose Lösung hatte einen Feststoffgehalt von 67,2 % und wurde ohne weitere Aufarbeitung weiter umgesetzt.

### 2. Umsetzung der MSA/Diketen-Copolymerisate A1 und A2 mit Aminen

### Beispiel 1

### MSA/Diketen-Monoamid

36,6 g A1 und 101 g Distearylamin (Armeen® 2HT der Fa. Akzo) wurden in 137 g Solvesso® 150 vorgelegt und auf 80°C aufgeheizt. Die Mischung wurde 8 h bei dieser Temperatur gerührt. Es wurde eine braune hochviskose Flüssigkeit mit einem Feststoffgehalt von 44 % erhalten.

Im IR-Spektrum konnte die Abnahme der Bande bei 1830 m⁻¹ (4-Ring-Lacton) beobachtet werden, sowie die Entstehung einer Bande bei 1650 cm⁻¹ (Amid). Die Säurezahl der Produktlösung lag bei 47 mg KOH/g.

### Beispiel 2

### MSA/Diketen-Bisester

46 g A1 und 250 g Hydroxyethylstearylamin wurden in 400 g Solvesso® 150 vorgelegt und auf 80°C erwärmt. Nach Zugabe von 1,5 g p-Toluolsulfonsäure wurde die Mischung auf 160°C aufgeheizt und 7,5 h bei dieser Temperatur gerührt. Es wurde eine braune 50 %ige Lösung des Produktes in Solvesso® 150 erhalten.

Im IR-Spektrum konnte die Abnahme der Bande bei 1830 cm⁻¹ (4-Ring-Lacton), sowie die Entstehung einer Bande bei 1730 cm⁻¹ (Ester) beobachtet werden. Die Säurezahl der Produktlösung lag bei 6 mg KOH/g.

### Beispiel 3

### Monoamid mit Oleylamin

27,5 g A1 und 40,1 g Oleylamin wurden in 110 g Solvesso® 150 vorgelegt und auf 80°C aufgeheizt. Die Mischung wurde 8 h bei dieser Temperatur gerührt. Es wurde eine braune hochviskose Flüssigkeit mit einem Feststoffgehalt von 43,5 % erhalten.

Im IR-Spektrum konnte die Abnahme der Bande bei 1830 cm⁻¹ (4-Ringlacton) beobachtet werden, sowie die Entstehung einer Bande bei 1650 cm⁻¹ (Amid). Die Säurezahl der Produktlösung lag bei 53 mg KOH/g.

### Beispiel 4

### Bisamid mit N-Talgfett-1,3-Diaminopropan

25,8 g A1 und 92,5 g N-Talgfett-1,3-Diaminopropan wurden in 200 g Solvesso® 150 vorgelegt. Die Mischung wurde auf 160°C aufgeheizt und 8 h bei dieser Temperatur gerührt. Es wurde eine braune 37,3 %ige Lösung des Produktes in Solvesso® 150 erhalten.

Im IR-Spektrum konnte die Abnahme der Bande bei 1830 cm⁻¹ (4-Ringlacton), sowie die Entstehung einer Bande bei 1650 cm⁻¹ (Amid) beobachtet werden. Die Säurezahl der Produktlösung lag bei 7,2 mg KOH/g.

### Beispiel 5

### Monoamid mit i-Tridecylamin

25,8 g A1 und 30 g i-Tridecylamin wurden in 80 g Solvesso® 150 vorgelegt und auf 80°C aufgeheizt. Die Mischung wurde 8 h bei dieser Temperatur gerührt. Es wurde eine braune hochviskose Flüssigkeit mit einem Feststoffgehalt von 46 % erhalten.

Im IR-Spektrum konnte die Abnahme der Bande bei 1830 cm⁻¹ (4-Ringlacton) beobachtet werden, sowie die Entstehung einer Bande bei 1650 cm⁻¹ (Amid). Die Säurezahl der Produktlösung lag bei 78 mg KOH/g.

### Beispiel 6

### Monoester mit propoxyliertem Ditalgfettamin

18,3 g A1 und 79,1 g Ditalgfettamin, das mit jeweils 5 Molekülen Propylenoxid propoxyliert worden war, wurden in 80 g Solvesso® 150 vorgelegt und auf 120°C aufgeheizt. Als Katalysator wurden 1,9 g 50 %ige unterphosphorige Säure zugegeben. Die Mischung wurde 8 h bei dieser Temperatur gerührt. Es wurde eine braune hochviskose Flüssigkeit mit einem Feststoffgehalt von 58 % erhalten.

Im IR-Spektrum konnte die Abnahme der Bande bei 1830 cm⁻¹ (4-Ringlacton) beobachtet werden, sowie die Entstehung einer Bande bei 1730 cm⁻¹ (Ester). Die Säurezahl der Produktlösung lag bei 57 mg KOH/g.

### Beispiel 7

### Monoester mit ethoxyliertem Distearylamin

18,3 g A1 und 63,9 g Distearylamin, das mit jeweils 3 Molekülen Ethylenoxid ethoxyliert worden war, wurden in 80 g Solvesso® 150 vorgelegt und auf 120°C aufgeheizt. Als Katalysator wurden 0,8 g 50 %ige unterphosphorige Säure zugegeben. Die Mischung wurde 8 h bei dieser Temperatur gerührt. Es wurde eine braune hochviskose Flüssigkeit mit einem Feststoffgehalt von 52,7 % erhalten.

Im IR-Spektrum konnte die Abnahme der Bande bei 1830 cm⁻¹ (4-Ringlacton) beobachtet werden, sowie die Entstehung einer Bande bei 1730 cm⁻¹ (Ester). Die Säurezahl der Produktlösung lag bei 42 mg KOH/g.

### Beispiel 8

### Monoamid mit Aminopropylstearylalkohol

25,8 g A1 und 47,0 g Aminopropylstearylalkohol wurden in 1200 g Solvesso® 150 vorgelegt und auf 80°C aufgeheizt. Die Mischung wurde 8 h bei dieser Temperatur gerührt. Es wurde eine braune hochviskose Flüssigkeit mit einem Feststoffgehalt von 44,5 % erhalten.

Im IR-Spektrum konnte die Abnahme der Bande bei 1830 cm⁻¹ (4-Ringlacton) beobachtet werden, sowie die Entstehung einer Bande bei 1650 cm⁻¹ (Amid). Die Säurezahl der Produktlösung lag bei 54 mg KOH/g.

### Beispiel 9

### Monoamid aus Fumarsäurebisester/Diketen-Copolymer

50,5 g A4 und 25,3 g Distearylamin wurden vorgelegt und auf 100°C aufgeheizt. Die Mischung wurde 12 h bei dieser Temperatur gerührt. Es wurde eine braune hochviskose Flüssigkeit mit einem Feststoffgehalt von 57 % erhalten.

Im IR-Spektrum konnte die Abnahme der Bande bei 1830 cm⁻¹ (4-Ring-Lacton), sowie die Entstehung einer Bande bei 1650 cm⁻¹ (Amid) beobachtet werden. Die Säurezahl der Produktlösung lag unter 4 mg KOH/g.

### Beispiel 10

### Monoamid aus Stearyldiketen/MSA-Copolymer

28 g A5 und 15,1 g Distearylamin wurden vorgelegt und auf 80°C aufgeheizt. Die Mischung wurde 15 h bei dieser Temperatur gerührt. Es wurde eine braune hochviskose Flüssigkeit mit einem Feststoffgehalt von 77,8 % erhalten.

Im IR-Spektrum konnte die Abnahme der Bande bei 1830 cm⁻¹ (4-Ring-Lacton), sowie die Entstehung einer Bande bei 1650 cm⁻¹ (Amid) beobachtet werden. Die Säurezahl der Produktlösung betrug 53 mg KOH/g.

### 3. Verwendungsbeispiele

Die erfindungsgemäßen Copolymerisate B1, B2 und B7 und ein bekannter Fließverbesserer F1 auf Basis eines Ethylen-Vinylpropionat-Copolymerisats mit ca. 40 Gew.-% Vinylpropionat und einem gewichtsmittleren Molekulargewicht von 2500 wurden in einer Reihe von Mitteldestillaten geprüft. Es handelte sich dabei um Dieselkraftstoffe in handelsüblicher deutscher Raffineriequalität; sie werden als DK 1, DK 2 und DK 3 bezeichnet:

| | DK 1 | DK 2 | DK 3 |
|---|---|---|---|
| Trübungspunkt CP (°C) | -8 | -7 | -7 |
| CFPP (°C) | -10 | -9 | -14 |
| Dichte b. 20°C (g/ml) | 0.831 | 0,826 | 0.814 |
| Siedeanfang (°C) | 175 | 172 | 164 |
| 20 % Siedepunkt (°C) | 223 | 217 | 206 |
| 90 % Siedepunkt (°C) | 314 | 321 | 306 |
| Siedeende (°C) | 352 | 356 | 337 |

### 3.1 Beschreibung der Testmethoden

Die Mitteldestillate wurden mit den in den Tabellen angegebenen Mengen der erfindungsgemäßen Copolymerisate Bl, B2 und B7 und/ oder dem bekannten Fließverbesserer F1 bei 40°C unter Rühren additiviert und anschließend auf Raumtemperatur abgekühlt.

### Test 1

Die additivierten Mitteldestillate wurden in 100 ml-Messzylindern für 20 Stunden in einem Kälteschrank bei -13°C gelagert. Anschließend wurden visuell Volumen und Aussehen sowohl der sedimentierten Paraffinphase als auch der darüber stehenden Ölphase bestimmt und beurteilt. Zusätzlich wurde von fast jeder Probe der "Cold Filter Plugging Point" (CFPP) nach DIN EN 116 gemessen.

Die Ergebnisse sind in Tabelle 1 aufgeführt. Es wird ersichtlich, daß die erfindungsgemäßen Copolymerisate B1 und B2 eine ausgezeichnete Wirkung als Paraffindispergatoren haben. Im Gegensatz dazu zeigt der Fließverbesserer F1 keine dispergierende Wirkung.

### Test 2

Die additivierten Mitteldestillate wurden in 500 ml-Glaszylindern in einem Kältebad von Raumtemperatur auf -13°C abgekühlt und 20 Stunden bei dieser Temperatur gelagert. Anschließend wurde visuell Menge und Aussehen der Paraffinphase bestimmt und beurteilt. Von der bei -13°C abgetrennten 20 Vol.%-Bodenphase wurde von jeder Probe der "Cold Filter Plugging Point" (CFPP) nach DIN EN 116 und der "Cloud Point" (CP) nach ASTM D 2500 ermittelt.

In Tabelle 2 sind die Ergebnisse aufgeführt. Ergänzend zur visuellen Beurteilung zeigt die gute Übereinstimmung des CP der 20 Vol-%-Bodenphase mit dem CP des jeweiligen Mitteldestillates, daß praktisch eine vollständige Dispergierung der n-Paraffine erreicht wurde.

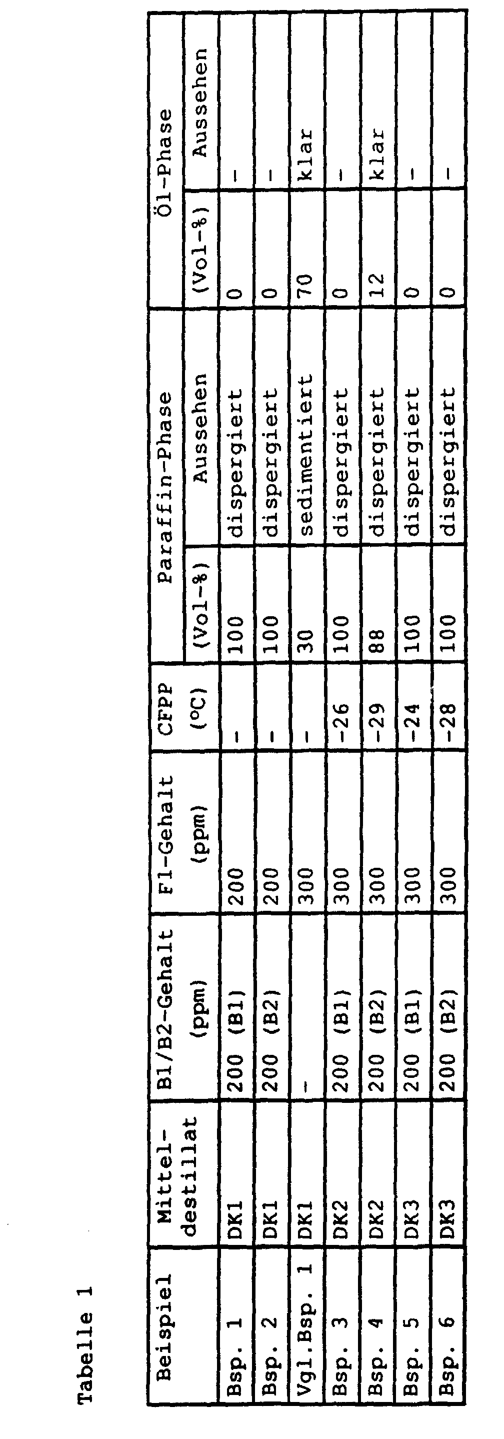

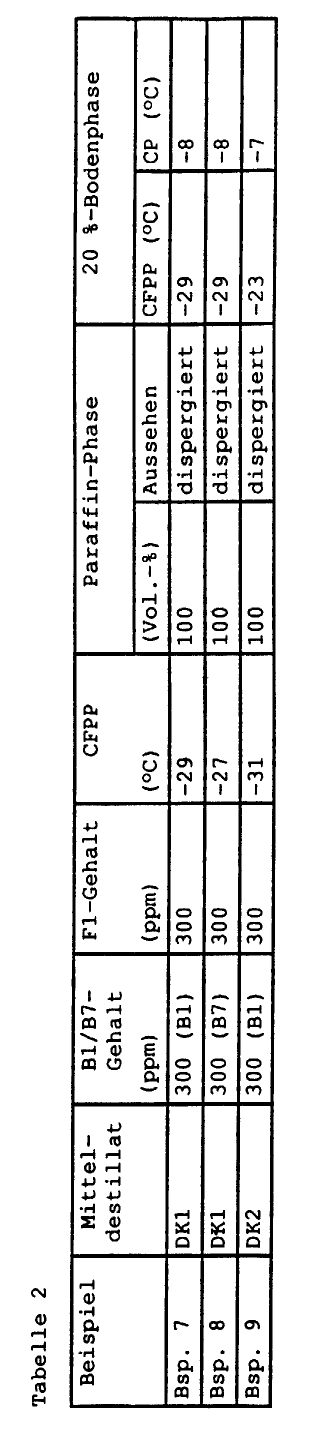

## Patentansprüche

1. Als Paraffindispergatoren geeignete modifizierte Copolymerisate, erhältlich durch Umsetzung eines Copolymerisats aus einer ethylenisch ungesättigten Dicarbonsäure und/oder einem Dicarbonsäurederivat und einem Diketen der allgemeinen Formel I 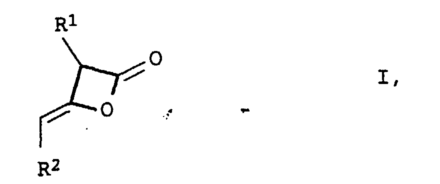 worin R¹ und R² unabhängig voneinander Wasserstoff oder C₁-C₃₀-Alkyl bedeuten,
wobei die Mitverwendung von monoethylenisch ungesättigten C₃- bis C₈-Monocarbonsäuren als Comonomere ausgeschlossen wird,
mit einem Amin der allgemeinen Formel II 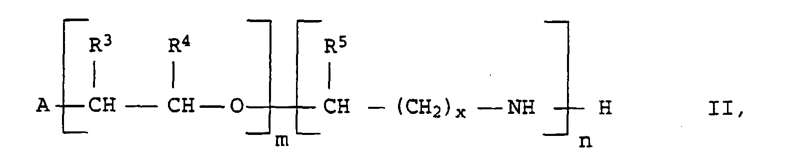 worin
m = 0 bis 100, n = 0 bis 5 und x = 0 bis 5 sein können,
R³, R⁴ und R⁵ unabhängig voneinander Wasserstoff oder einen C₁-C₅-Alkylrest bedeuten,
A für NR⁶R⁷ oder einen C₂-C₃₀-Alkoxyrest steht,
worin mindestens einer der Substituenten R⁶ oder R⁷ von Wasserstoff verschieden ist und einen C₁-C₃₀-Alkyl- oder Alkenylrest oder einen Polyetherrest 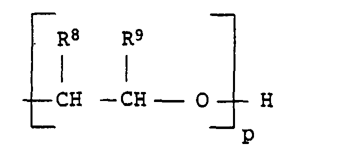
mit R⁸, R⁹ = Wasserstoff oder C₁-C₅-Alkyl und p = 1 bis 100 bedeutet,
mit der Maßgabe, daß für n = 0 A die Bedeutung NR⁶R⁷ hat.

2. Copolymerisate nach Anspruch 1, dadurch gekennzeichnet, daß n oder m gleich 0 ist.

3. Copolymerisate nach Anspruch 1 oder 2, dadurch gekennzeichnet, daß ethylenisch ungesättigte-Dicarbonsäuren und/oder Dicarbonsäurederivate der allgemeinen Formel III 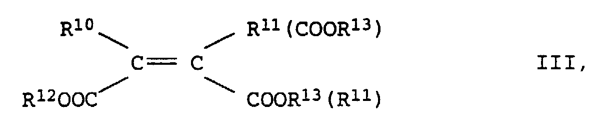 worin R¹⁰ bis R¹³ unabhängig voneinander Wasserstoff oder einen gegebenenfalls Heteroatome enthaltenden C₁-C₂₀-Alkylrest bedeuten, oder die Säureanhydride der entsprechenden cis-Dicarbonsäuren eingesetzt werden.

4. Copolymerisate nach Anspruch 3, dadurch gekennzeichnet, daß R¹⁰ und R¹¹ Wasserstoff bedeuten.

5. Verwendung der Copolymerisate gemäß Anspruch 1 als Zusatz für Erdölmitteldestillate.

6. Erdölmitteldestillate, enthaltend Copolymerisate gemäß Anspruch 1.

7. Verfahren zur Herstellung von modifizierten Copolymerisaten, die als Paraffindispergatoren geeignet sind, durch Umsetzung eines Copolymerisats aus einer ethylenisch ungesättigten Dicarbonsäure und/oder einem Dicarbonsäurederivat und einem Diketen der allgemeinen Formel I 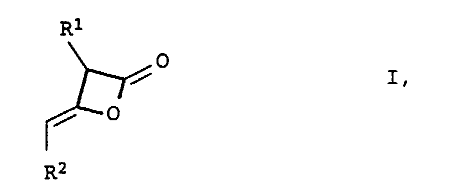 worin R¹ und R² unabhängig voneinander Wasserstoff oder C₁-C₃₀-Alkyl bedeuten,
wobei die Mitverwendung von monoethylenisch ungesättigten C₃- bis C₈-Monocarbonsäuren als Comonomere ausgeschlossen wird,
mit einem Amin der allgemeinen Formel II 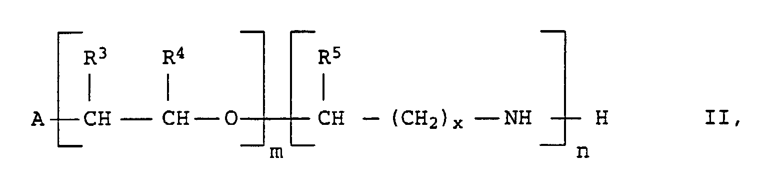 worin
m = 0 bis 100, n = 0 bis 5 und x = 0 bis 5 sein können,
R³, R⁴ und R⁵ unabhängig voneinander Wasserstoff oder einen C₁-C₅-Alkylrest bedeuten,
A für NR⁶R⁷ oder einen C₂-C₃₀-Alkoxyrest steht,
worin mindestens einer der Substituenten R⁶ oder R⁷ von Wasserstoff verschieden ist und einen C₁-C₃₀-Alkyl- oder Alkenylrest, oder einen Polyetherrest 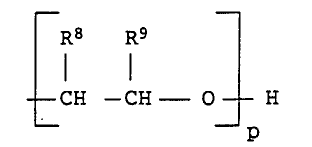
mit R⁸, R⁹ = Wasserstoff oder C₁-C₅-Alkyl und p = 1 bis 100 bedeutet,
mit der Maßgabe, daß für n = 0 A die Bedeutung NR⁶R⁷ hat.

## Claims

1. A modified copolymer which is suitable as a paraffin dispersant and is obtainable by reacting a copolymer of an ethylenically unsaturated dicarboxylic acid or a dicarboxylic acid derivative and a diketene of the formula I 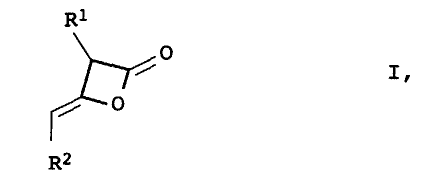 where R¹ and R², independently of one another, are each hydrogen or C₁-c₃₀-alkyl,
but excluding the use of monoethylenically unsaturated C₃- to C₈-monocarboxylic acids as comonomers,
with an amine of the formula II 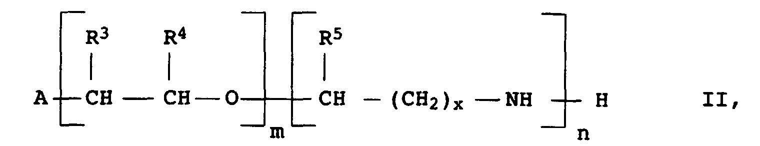 where
m may be from 0 to 100, n from 0 to 5 and x from 0 to 5,
R³, R⁴ and R⁵, independently of one another, are each hydrogen or C₁-C₅-alkyl and
A is NR⁶R⁷ or C₂-C₃₀-alkoxy,
and at least one of the substituents R⁶ or R⁷ is not hydrogen and is C₁-C₃₀-alkyl or alkenyl or a polyether radical 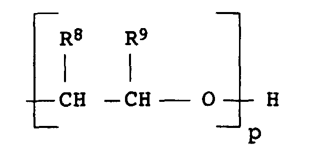 where R⁸ and R⁹ are each hydrogen or C₁-C₅-alkyl and p is from 1 to 100,
with the proviso that, when n is 0, A is NR⁶R⁷.

2. A copolymer as claimed in claim 1, wherein n or m is 0.

3. A copolymer as claimed in claim 1 or 2, wherein an ethylenically unsaturated dicarboxylic acid or dicarboxylic acid derivative of the formula III 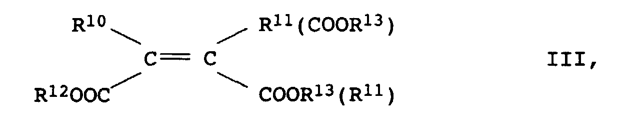 where R¹⁰ to R¹³, independently of one another, are each hydrogen or a C₁-C₂₀-alkyl radical which may contain hetero atoms, or an anhydride of a corresponding cis-dicarboxylic acid is used.

4. A copolymer as claimed in claim 3, wherein R¹⁰ and R¹¹ are each hydrogen.

5. Use of a copolymer as claimed in claim 1 as an additive for mineral oil middle distillates.

6. A mineral oil middle distillate containing a copolymer as claimed in claim 1.

7. A process for the preparation of a modified copolymer which is suitable as a paraffin dispersant by reacting a copolymer of an ethylenically unsaturated dicarboxylic acid or a dicarboxylic acid derivative and a diketene of the formula I 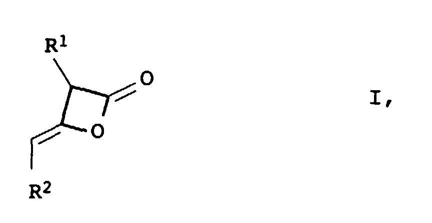 where R¹ and R², independently of one another, are each hydrogen or C₁-C₃₀-alkyl,
but excluding the use of monoethylenically unsaturated C₃- to C₈-monocarboxylic acids as comonomers,
with an amine of the formula II 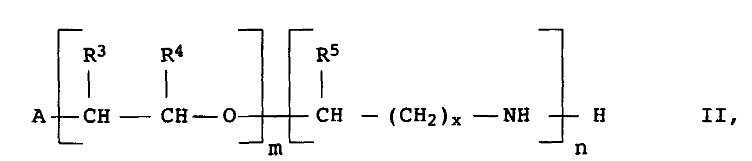 where
m may be from 0 to 100, n from 0 to 5 and x from 0 to 5,
R³, R⁴ and R⁵, independently of one another, are each hydrogen or C₁-C₅-alkyl and
A is NR⁶R⁷ or C₂-C₃₀-alkoxy,
and at least one of the substituents R⁶ or R⁷ is not hydrogen and is C₁-C₃₀-alkyl or alkenyl or a polyether radical 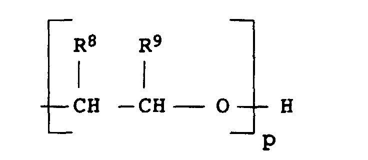 where R⁸ and R⁹ are each hydrogen or C₁-C₅-alkyl and p is from 1 to 100,
with the proviso that, when n is 0, A is NR⁶R⁷.

## Revendications

1. Copolymères modifiés convenant en tant qu'agents dispersants de paraffine, pouvant être obtenus par réaction d'un copolymère obtenu à partir d'un acide dicarboxylique à insaturation éthylénique et/ou à partir d'un dérivé d'acide dicarboxylique, et d'un dicétène de formule générale I 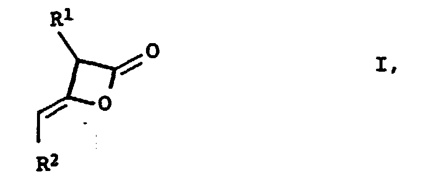 dans laquelle R¹ et R² représentent chacun indépendamment l'un de l'autre un atome d'hydrogène ou un groupement alkyle en C₁-C₃₀, l'utilisation d'acides monocarboxyliques en C₃-C₈ à insaturation monoéthylénique en tant que comonomère étant exclue,
avec une amine de formule générale II 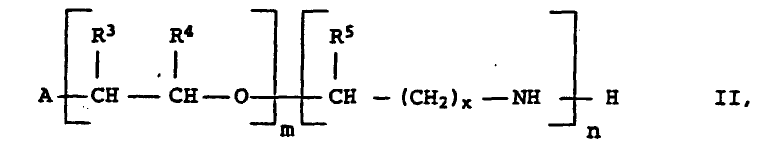 dans laquelle
m = 0 à 100, n = 0 à 5 et x = 0 à 5,
R³, R⁴ et R⁵ représentent chacun indépendamment les uns des autres, un atome d'hydrogène ou un reste alkyle en C₁-C₅,
A est mis pour NR⁶R⁷ ou un reste alcoxy en C₂-C₃₀,
où l'un au moins des substituants R⁶ ou R⁷ est différent d'un atome d'hydrogène et représente un reste alkyle en C₁-C₃₀ ou alcényle ou un reste polyéther 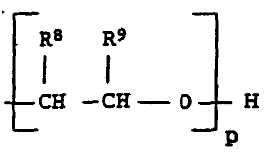 avec R⁸, R⁹ représentant un atome d'hydrogène ou un groupement alkyle en C₁-C₅ et p = 1 à 100,
étant spécifié que lorsque n = 0, A représente NR⁶R⁷.

2. Copolymères selon la revendication 1, caractérisés en ce que n ou m valent 0.

3. Copolymères selon la revendication 1 ou 2, caractérisés en ce qu'on utilise des acides dicarboxyliques à insaturation éthylénique et/ou des dérivés d'acide dicarboxylique de formule générale III 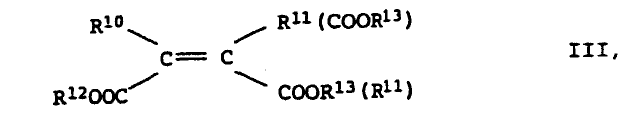 dans laquelle R¹⁰ à R¹³ représentent chacun indépendamment les uns des autres un atome d'hydrogène ou un reste alkyle en C₁-C₂₀ contenant éventuellement des hétéroatomes, ou bien les anhydrides d'acide des acides cis-dicarboxyliques correspondants.

4. Copolymères selon la revendication 3, caractérisés en ce que R¹⁰ et R¹¹ représentent des atomes d'hydrogène.

5. Utilisation de copolymères selon la revendication 1 en tant qu'additif pour les distillats moyens du pétrole.

6. Distillats moyens du pétrole contenant des copolymères selon la revendication 1.

7. Procédé de préparation de copolymères modifiés, convenant en tant qu'agents dispersants de paraffine, par réaction d'un copolymère obtenu à partir d'un acide dicarboxylique à insaturation éthylénique et/ou à partir d'un dérivé d'acide dicarboxylique, et d'un dicétène de formule générale I 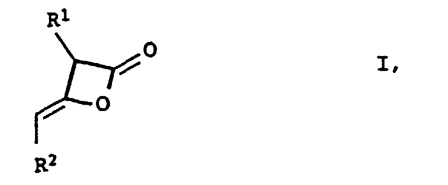 dans laquelle R¹ et R² représentent chacun indépendamment l'un de l'autre un atome d'hydrogène ou un groupement alkyle en C₁-C₃₀, l'utilisation d'acides monocarboxyliques en C₃-C₈ à insaturation monoéthylénique en tant que comonomère étant exclue,
avec une amine de formule générale II 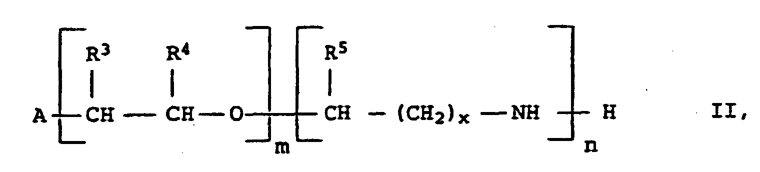 dans laquelle
m = 0 à 100, n = 0 à 5 et x = 0 à 5,
R³, R⁴ et R⁵ représentent chacun indépendamment les uns des autres, un atome d'hydrogène ou un reste alkyle en C₁-C₅,
A est mis pour NR⁶R⁷ ou un reste alcoxy en C₂-C₃₀,
où l'un au moins des substituants R⁶ ou R⁷ est différent d'un atome d'hydrogène et représente un reste alkyle en C₁-C₃₀ ou alcényle ou un
reste polyéther 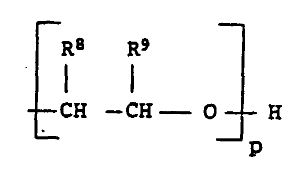 avec R⁸, R⁹ représentant un atome d'hydrogène ou un groupement alkyle en C₁-C₅ et p = 1 à 100,
étant spécifié que lorsque n = 0, A représente NR⁶R⁷.
